# EUROPEAN PATENT APPLICATION

(11) **EP 1 804 153 A1**
(43) Date of publication of application: **04.07.2007**
(21) Application number: 05301112.8
(22) Date of filing: 27.12.2005
(51) Int. Cl.: G06F 3/033

(54) **User customizable drop-down control list for GUI software applications**

(71) Applicant: Amadeus s.a.s, 06410 Biot (FR)
(72) Inventor: Luneau, Christophe, 06000 Nice (FR); Mollard, Stéphane, 06000 Nice (FR)
(74) Representative: Decobert, Jean-Pascal

(57) **Abstract**

An extended computer graphic user interface (GUI) component is described which comprises a drop-down list of currently selected items displayed after a selection icon is clicked in a conventional manner, e.g., by left-clicking with a pointing device when a cursor is moved over the selection icon. The drop-down list comprises an input line, used to enter a new item to be added to the list of currently selected items, and a second selection icon that displays when any item of the list of currently selected items is highlighted while the cursor is moved over it. The second selection icon causes a pop-up menu of options to display if clicked in a conventional manner. The pop-up menu is aimed at further customizing the extended GUI component. Options of the pop-up menu include the possibilities of deleting an item, choosing an item to become a default item and restoring an initial list of items. The selection of the pop-up menu is alternatively obtained in right-clicking over the highlighted item.

An extended computer graphic user interface (GUI) component according to the invention is fully compatible with the mode of operation of standard drop-down lists while offering the extra possibility of being customizable by the user.

## Description

### FIELD OF THE INVENTION

The present invention relates generally to the field of graphical user interfaces (GUI) and, more specifically, to the kind of GUI components that allow a user to choose items from a list, such as a drop-down list box or combo box.

### BACKGROUND OF THE INVENTION

Providing a graphical user interface or GUI has become the norm for all software applications that have been developed since, at least, the beginning of the 90's on most modern operating systems (OS) including, Microsoft Windows, Apple Macintosh OS and all derivatives of UNIX, the time-sharing OS originally conceived at Bell Laboratories.

If a GUI does not always completely replace the traditional command line interface (CLI) i.e., the text-based user interface requiring that commands be typed on computer keyboards to dialog with a software application, it is however always considered, nowadays, as a mandatory complement to it.

Software applications equipped with a GUI can display all sorts of GUI components including images, icons, buttons, dialog boxes etc. on screen windows so that user can control the application, essentially by moving a pointer on the screen, typically with the most spread pointing device i.e. a mouse, and selecting some of the GUI components while pointing at them. This is completely opposed to a command line interface where communication is achieved by exchange of strings of text. Because CLI first requires that numerous commands be remembered by the user of a software application before it can use it efficiently, a GUI is now always preferred.

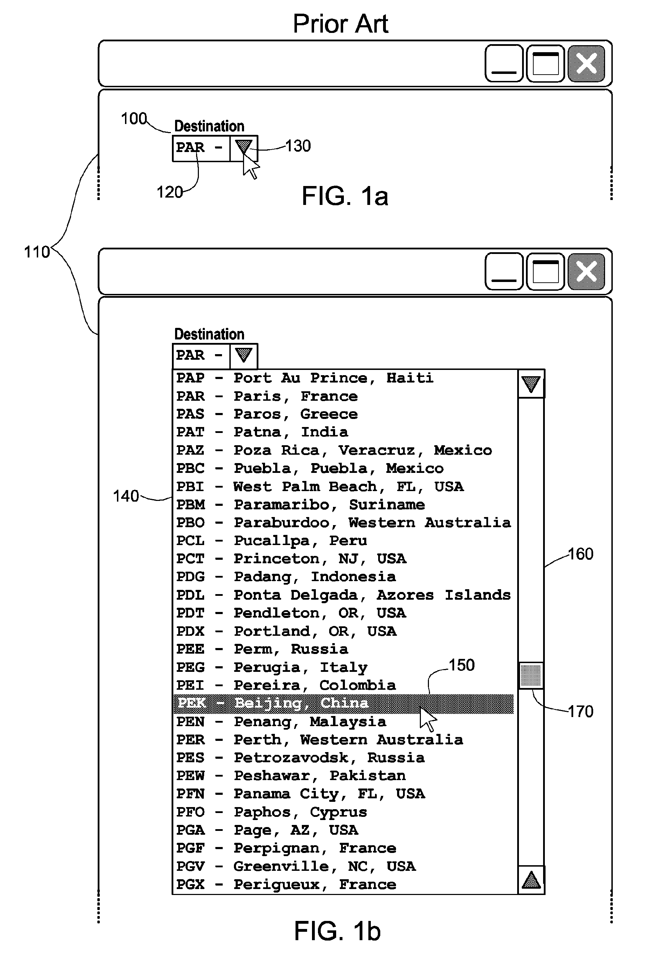

A typical GUI component is a drop-down list or combo-box (100) as shown in FIG. 1a. The chief advantage of such a GUI component is that it occupies little space on the screen window opened by the software application (110). Many of such boxes can thus be displayed together in an attempt to cope with the large number of commands and parameters that are needed to control the most recent software applications which tend to become more and more sophisticated. The box typically displays a default or current value of the command or parameter (120). A selection means is associated to the box (130), generally under the form of a clickable icon (typically, left clickable i.e., selectable when the left button of a standard two-button mouse is activated) so that, when clicked, the drop-down list of options is displayed (140) in the screen window (110) and a new choice can be effected (150) by the user as shown in FIG. 1 b.

A problem is still not completely resolved with this popular mode of operation though. When the list of parameters or commands is long, which is often the case; the user must have to scroll through all list items. This is a cumbersome and an error prone operation, especially when the list is very long and cannot be displayed entirely in the screen window so that a standard scrollbar (160) must also be displayed and activated by moving vertically the cursor (170) to eventually retrieve what user wants to select (150).

Various solutions have been proposed to get around this problem. As an example, US patent 6,121,968 assigned to Microsoft Corporation and untitled 'Adaptive menus' teaches how to manage the display of a short and a long version of a menu of items to select. However, nothing is really under the direct control of the user. The short version menu content is a subset of the long menu and is only comprised of the items recently selected by the user, including the wrong selections that may have been done (they will eventually disappear from the short menu, after some time, if not accidentally selected again). To select an item that does not currently appear, the short menu must be expanded to see the complete list of commands or parameters so that the user is back to the initial problem of having to select an item from a very long list.

Another approach which also attempts to solve the problem is described in US patent application 2002/0167548. This patent application teaches how a drop-down list is customizable so that a "hot-list" of user preferred items is displayed, instead of the regular long list. However, this is obtained by activating the box list in a second manner i.e., in practice, by right-clicking on the selection icon (130). This is however a very unnatural way of performing a selection while in the regular process of using a software application GUI in production. Indeed, many casual users of a GUI just never use the right button of a mouse. Professionals and more trained users tend to think to the right-click only when in search of more options or preferences to set, or to access directly to other menus. For example, the most spread word processor i.e.: Word by Microsoft, allows to right-click in a text selection to get direct access to menus so that selected text format can be more quickly modified.

Because of the now long history of GUIs, de-facto standards have been adopted and must continue to be adhered to. Even though a selection that offers significant advantages can be achieved with a right-click e.g., as explained in above patent application, it may not likely be largely adopted, if not simply ignored by most users, because this goes too much against well-established habits.

On the other hand, users are generally not completely satisfied with a method as taught by above Microsoft patent where they cannot exercise any control over what is displayed other than selecting the long menu if what is looked for is not found in the short list.

Hence, it is desirable to provide a GUI drop-down list or combo-box that is self-modifiable to best adapt to particular user needs, under the sole control of the user, and that does not require for selection anything but a left-click on the selection icon of what first appears to be a regular drop-down list or combo-box (100).

Further objects, features and advantages of the present invention will become apparent to the ones skilled in the art upon examination of the following description in reference to the accompanying drawings. It is intended that any additional advantages be incorporated herein.

### SUMMARY OF THE INVENTION

The present invention describes an extended computer graphic user interface (GUI) component which comprises a drop-down list of currently selected items displayed after a selection icon is clicked in a conventional manner, e.g., by left-clicking with a pointing device when a cursor is moved over the selection icon. The drop-down list comprises an input line, used to enter a new item to be added to the list of currently selected items, and a second selection icon that displays when any item of the list of currently selected items is highlighted while the cursor is moved over it. The second selection icon causes a pop-up menu of options to display if clicked in a conventional manner. The pop-up menu is aimed at further customizing the extended GUI component. Options of the pop-up menu include the possibilities of deleting an item, choosing an item to become a default item and restoring an initial list of items. The selection of the pop-up menu is alternatively obtained in right-clicking over the highlighted item.

### BRIEF DESCRIPTION OF THE DRAWINGS

FIGS.1a and 1b, together, illustrate the use of a standard combo-box as it is known from the art.
FIGS. 2a, 2b and 2c, together, describe a combo-box according to the invention.
FIG. 3 is a flow chart illustrating the steps for using a combo-box according to the invention.

### DETAILED DESCRIPTION

The following detailed description of the invention refers to the accompanying drawings. While the description includes exemplary embodiments, other embodiments are possible, and changes may be made to the embodiments described without departing from the spirit and scope of the invention.

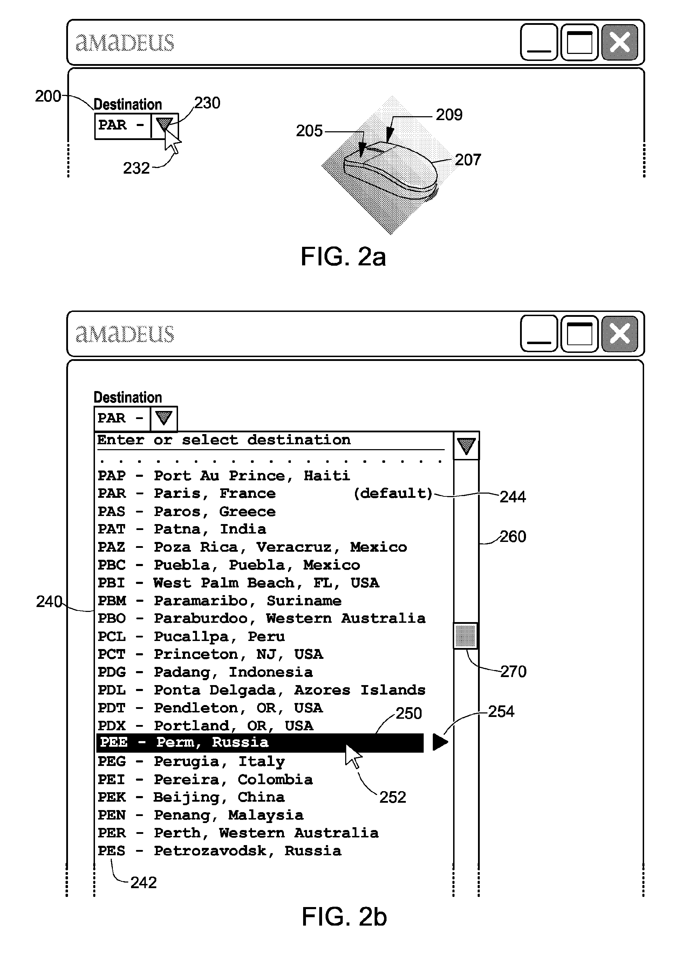

As shown in FIG. 2a a combo-box according to the invention, when closed (200), is not different of a standard combo-box as it is known from the prior art. Selection is performed by clicking on the left button (205) of a standard two-button mouse when pointer (232) is brought, with the mouse, over the selection icon (230). This is not different of what users of GUIs have been accustomed to do when they want to display the list of parameters or commands that can be selected from a drop-down list.

Once drop-down list has been selected it displays (240) as shown in FIG. 2b. Selection of a list item can be performed as with a regular combo-box. Hence, when cursor is moved over (252) the chosen item (250) it is automatically highlighted. Then, as with a regular combo-box, user may left-click on it to select the item. After which, list is automatically hidden and combo-box displays again as in FIG. 2a.

In this particular example used to describe the invention the closed combo-box (200) is assumed to always display a default list item chosen by the user. The default item is clearly specified (244) when drop-down list is displayed (240). The way of selecting a default list item is explained in the following description of invention. If none has been specified the display field of the closed combo-box (200) is blanked.

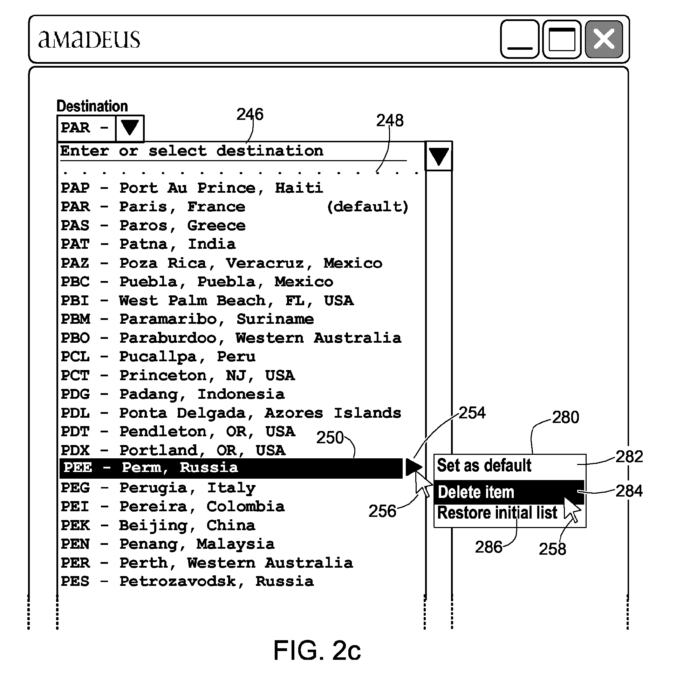

In example of FIG. 2 the software application is assumed to be of the kind used by travel agencies to book an airline trip. At some point of time in the reservation process a destination city airport will have to be selected as explained above. However, there are possibly thousands of destinations all over the world. Each city airport is designated with a unique three-letter code (242) as set by IATA or International Air Transport Association i.e., the governing body that creates regulation for international air transport. Such software applications are developed for travel agencies e.g., by any of a few global distribution system (GDS) companies that allow real-time access to airline fares, schedules, and seating availability thus offering to travel agencies, from all over the world, the capacity of booking reservations and generating tickets. Those software applications must be able to recognize all possible destinations. However, displaying all in a drop-down list to allow a travel agent to perform a choice does not make sense since agent would have to always scroll, at each booking, through a list including thousands of items. As a consequence, a software application of the kind considered by the present invention i.e., necessitating to have to choose among numerous items, must offer the possibility of adapting a drop-down list to the particular needs of each user, the travel agencies in this example. Two travel agencies, one in Asia and another one in Europe, even though they would be affiliated to the same GDS, thus using the same software application, have definitively to use different lists from which to choose destinations.

To this end a combo-box according to the invention can be customized by the user. When a particular destination (250) of the list is highlighted, because the cursor is moved over it (252), a second selection icon (254) is also displayed, for example, to the right of the highlighted item. Depending on the length of the list and available space in the window, scroll bar (260) and cursor (270) may, or may not, show as with a regular combo-box. If the highlighted item must indeed be selected a left-click on it (205), thus ignoring the selection icon (254), will actually select the chosen destination (250) as with a regular combo-box.

However, with a combo-box according to the invention, a list item can also be highlighted for the purpose of customizing the list. If, instead of selecting the highlighted item, the selection icon (254) is left-clicked, after cursor have been move over it (256), a pop-up menu is displayed as shown in FIG 2c.

In this exemplary description of the invention, displayed menu (280) offers three choices:
-- The highlighted item (250) can be set as becoming the default item (282) i.e., the one which shows in combo-box when closed (200) as already discussed above. A particular travel agency or travel agent may sell more airline tickets for a particular destination. Thus, agent may want to see this particular destination to always appear in closed box so that destination needs not to be changed.
-- The user may want to delete (284) the highlighted item (250) if considered as useless by the travel agency or agent using the software application. If selected, this option will remove highlighted item so that it will no longer appear in the drop-down list next time it is selected. It is worth noting here that, even though item will no longer appear in the list, it is still recognizable by the software and can be added again, if necessary, as it is further discussed hereafter.
-- Finally, user may want to restore (286) the initial list of items. This may be needed, for example, because a new user would like to completely remove the customization that may have been done by a previous user of the software application running over a particular computer or from a computer terminal. The initial list may not contain all the items that can be recognized by the software application. Indeed, if the list is potentially very long, the initial list may just contain a subset of the complete list of items. In the particular example used to illustrate the invention, where list items are city airport destinations, the potential list is definitively too long. Hence, the software application may just initially contain only e.g., a short list of the largest city airports in the world. Then, users take care themselves of building their own list that best fulfill their need.

Optionally, initial list may just be empty. In both cases (empty list or short list of, e.g., largest airports), it is assumed that users know what items are valid for the software application considered. In the particular example chosen to illustrate the invention the list of city airports can be easily retrieved from many sources so that the three-letter code can be entered by the user. In any case, this may be documented in the engineering specification of the software application considered.

Therefore, to allow adding items to the drop-down list, a combo-box according to the invention also displays an input line (248) under a prompt that invites user to enter a new item (246). The new entered item will appear in drop-down list at next selection of the combo-box at a place corresponding to the sorting method used to display the drop-down list, most often in alphabetical order as shown in this particular example.

It will be apparent to those skilled in the art that a different set of choices could be offered as well to the user of a combo-box according to the invention depending on the application. When pop-up menu (280) is displayed, after second selection icon is left-clicked, more or fewer choices, or a different set of choices, could be proposed as well to the user of a particular application. As an example, user could be proposed the choice of displaying list items in a different order. This may include the usual alphabetical order or to display the most recently used or the most frequently used items first etc. Also, lists can be customized per user provided users are logging to the computer, or computer terminal, with a different user ID. This is almost always the case in order to prevent any misuse of computing resources.

Although FIG.2 describes the invention assuming there is a default list item this is not a mandatory feature. The closed combo-box may contain as well e.g., the last selected list item. Pop-up menu (280) content would then be different of what is shown e.g., enabling more options to be chosen by the user like the choice of what must appear in the closed combo-box or the maximum number of items that can appear in the list.

The selection of an option in pop-up menu (280) is done in a standard way. That is, cursor is moved (258) over the chosen option (284) which becomes highlighted. Then, a left-click is done so that item (250) will be deleted in this particular example.

In an alternate implementation of the invention the selection of the second icon (254) may be replaced with a right-click (209) over the highlighted item (250). Although right-clicking tends to be far less frequently used, if not just ignored by casual users, this way of using right-clicking conforms to GUI de-facto standards. Indeed, experimented user of a GUI will certainly expect that a menu, offering more choices, be displayed when right-clicking over the highlighted item. The operation of the combo-box, as described above, would not be otherwise affected i.e., pop-up menu (280) will show as if second selection icon (254) would have been selected.

Obviously, instead of replacing the selection icon, right-clicking over the highlighted item and left-clicking over the second selection icon could be both active so that user may choose either method for obtaining the customization menu (280).

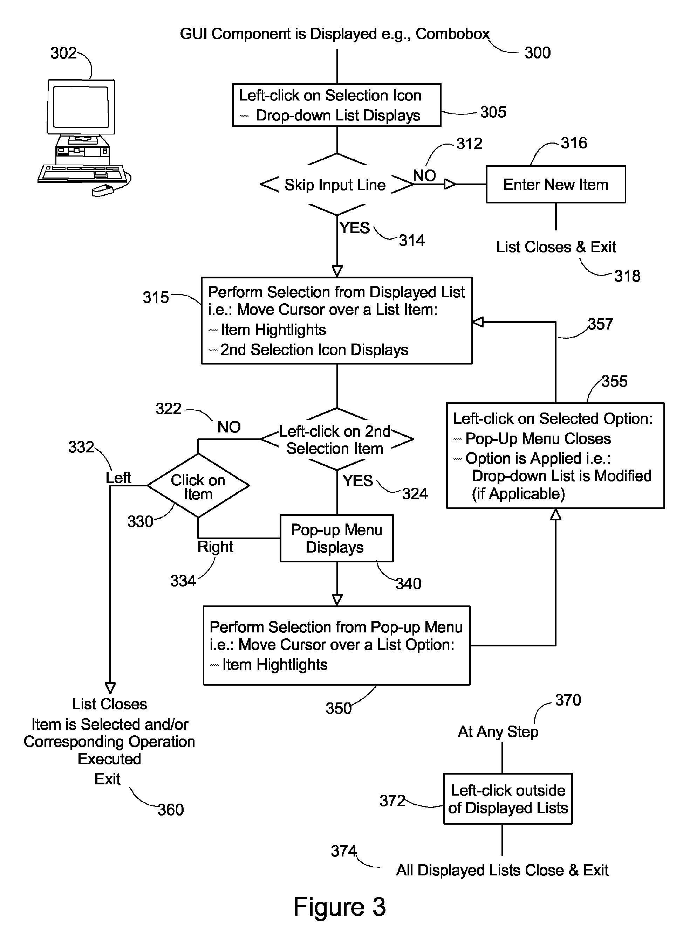

FIG. 3 is a flow chart illustrating the steps for using a combo-box according to the invention.

When a GUI component according to the invention is displayed (300) e.g., a combo-box, typically in a window opened on the screen of a computer (302) by a software application, a left-click on the selection icon of the box displays the associated drop-down list (305).

As mentioned previously, list always contains an input line. Unless user wants to add an item to the displayed list, in order to customize it, the input line is skipped (314) though.

If not skipped (312), user must left-click the input line and enter a new item from the computer keyboard (316). As soon as the keyboard enter-key is hit, the list closes and combo-box is exited (318). New entered item will then appear at next display of the drop-down list so that new entered item can now be selected and/or corresponding operation executed as explained hereafter.

When input line is skipped (314), moving the cursor over an item of the displayed list of items, causes the item to highlight and also displays the second selection icon already discussed in Fig. 2 (315).

At this stage the user has the opportunity to left click on the second selection icon or to click on highlighted item itself (330).

If user decides to left-click (324) on the second selection item the pop-up menu shown in Fig. 2 displays (340). The user has now the possibility to select an option from the pop-up menu. This is done as usual i.e., the cursor is moved other the chosen option which in turn highlights. Then, a left-click on selected option (355) triggers the closing of the pop-up menu and the immediate execution of the corresponding operation. For example, as discussed in Fig. 2, the operation can consist in deleting an item from the list in which case the drop-down list is immediately reorganized.

After pop-up menu closes, user can return (357) to the drop-down list to perform a new selection (315).

It must be noted here that user, from any step (370), can always left-click outside of the displayed lists (372) so as to close them (drop-down list and pop-up menu if active) and to exit the combo-box (374).

If, however, user has not left-clicked on the selection item (322) he/she is left with the choice of left or right clicking on highlighted item (330). Left clicking (332) is what is usually performed in any drop-down list to select an item and/or to execute the operation corresponding to the selection (360). This normally closes the list too. A combo-box according to the invention thus behaves as a standard combo-box to this view-point.

Finally, user has also the possibility of right-clicking on the highlighted item (334). This has the same effect as left-clicking on the second selection icon thus, pop-up menu is displayed (340) and the same options are offered to the user as discussed above.

Although this is not described in the here above description a combo-box according to the invention may also need to implement standard checking practices before actually carrying out the operations that customize it. For example, if user has decided to delete an item from the drop-down list he/she may be asked to confirm the deletion before operation is actually carried out. In practice, this is generally achieved in clicking on a YES or NO button of a standard pop-up menu (not shown) asking to confirm the operation. Similarly, when user enters a new item it may appear necessary to check that the input indeed matches what software application is able to recognize. If user makes a typo when entering a new item a warning window should be displayed to request user to retry it (so that wrong input is ignored and user is made aware of his/her mistake).

Hence, a combo-box according to the invention is fully compatible with the mode of operation of a standard combo-box while offering the extra possibility of being customizable by the user to better meets his/her needs.

## Claims

1. An extended computer graphic user interface (GUI) component (200) comprising a drop-down list of currently selected items (240) displayed after a first selection icon (230) is clicked in a first conventional manner with a pointing device (207) when a cursor (232) is moved over said first selection icon with said pointing device, the extension comprising:
an input line (248) used to enter a new item to be added to said list of currently selected items (240);
a second selection icon (254) displayed when any item of said list of currently selected items is highlighted (250) while said cursor is moved over (252) said any item, said second selection icon causing a pop-up menu of options to display (280) if clicked in said first conventional manner, said pop-up menu aimed at further customizing said extended GUI component.

2. The extended GUI component according to claim 1, wherein said first conventional manner of clicking consist in clicking with the left button (205) of a standard mouse (207) pointing device.

3. The extended GUI component according to claim 1, wherein said pop-up menu of options includes an option for deleting (284) said highlighted item from said list of currently selected items.

4. The extended GUI component according to claim 1, wherein said pop-up menu of options includes an option for choosing said highlighted item to become a default item (282) of said GUI component.

5. The extended GUI component according to claim 1, wherein said pop-up menu of options includes an option for restoring an initial list of items (286).

6. The extended GUI component according to claim 5, wherein said initial list of items is an empty list.

7. The extended GUI component according to claim 1, wherein said pop-up menu is alternatively displayed when said any item is clicked (209) in a second conventional manner.

8. The extended GUI component according to claim 7, wherein said second conventional manner of clicking consist in clicking with the right button (209) of a standard mouse (209) pointing device.

9. A method of customizing a computer graphic user interface (GUI) component including a selection icon to display a drop-down list of currently selected items, said method including the steps of:
displaying (305) said drop-down list of currently selected items further including an input line;
optionally selecting (312) said input line to enter a new item (316) in said drop-down list of currently selected items;
optionally displaying (340) a pop-up menu of options to further customize (355) said GUI component; else,
selecting an item from said drop-down list of currently selected items.

10. The method according to claim 9 wherein the step of displaying a pop-up menu of options is obtained in left-clicking (324) a second selection icon displayed when any item of said drop-down list of currently selected items is highlighted.

11. The method according to claim 9 wherein the step of displaying said pop-up menu of options is alternatively obtained in right-clicking (334) over said any highlighted item.

12. A computer program product including a graphic user interface (GUI), stored on a computer readable storage medium, comprising computer readable code means for causing at least one computer to operate the method of customizing a GUI component according to any one of the claims 9 to 11.
